# EUROPÄISCHE PATENTSCHRIFT

(11) **EP 2 718 576 B1**
(45) Veröffentlichungstag und Bekanntmachung des Hinweises auf die Patenterteilung: **29.07.2015**
(21) Anmeldenummer: 11796679.6
(22) Anmeldetag: 09.12.2011
(51) Int. Cl.: F16C 13/00, B24B 5/37

(54) **WALZE UND VERFAHREN ZU HERSTELLUNG UND BETRIEB**
ROLLER AND METHODS FOR PRODUCTION AND OPERATION
CYLINDRE ET PROCÉDÉ DE PRODUCTION ET DE FONCTIONNEMENT

(30) Priorität: 06.06.2011 DE 102011050860; 09.08.2011 DE 102011052535
(43) Veröffentlichungstag der Anmeldung: 16.04.2014
(73) Patentinhaber: Andritz Küsters GmbH, 47805 Krefeld (DE)
(72) Erfinder: KUBIK, Klaus, 47918 Tönisvorst (DE); HÜNNEKENS, Andre, 47647 Kerken (DE)
(74) Vertreter: Kluin, Jörg-Eden
(86) Internationale Anmeldenummer: PCT/EP2011/072322
(87) Internationale Veröffentlichungsnummer: WO 2012/167849

(56) Entgegenhaltungen:
- EP-A2- 0 230 288
- WO-A1-2009/113115
- DE-A1- 3 700 227
- US-A- 4 250 606

## Beschreibung

Die Erfindung betrifft ein Verfahren, bei dem eine eine Drehachse aufweisende Walze während der Herstellung und/oder während des Betriebs entgegen einer Krümmung gebogen wird. Die Erfindung betrifft auch eine derartige Walze.

Derartige Verfahren bzw. Walzen sind bereits bekannt. Beispielsweise zeigt die DE 19819663 A1 eine derartige Walze. Nachteilig hierbei ist, dass die Walze und das Verfahren aufwändig sind.

Die Erfindung hat es sich zur Aufgabe gemacht, eine Walze und ein Verfahren zu schaffen, welche hinsichtlich des genannten Nachteils verbessert sind.

Diese Aufgabe wird durch das in Anspruch 1 wiedergegebene Verfahren und die in den Ansprüchen 8 und 12 wiedergegebenen Walzen gelöst.

Bei dem erfindungsgemäßen Verfahren wird eine eine Drehachse aufweisende Walze entgegen einer Krümmung gebogen. Dies erfolgt mittels mindestens einer in radialem Abstand zur Drehachse angeordneten Zugeinrichtung.

Das Verfahren dient zur Verminderung des Rundlauffehlers einer umlaufenden Walze und es wird dem Rundlauffehler mittels einer ihm entgegen gesetzten Biegung der Walze in einer durch ihre Achse gehenden Ebene entgegengewirkt. Die Walze wird also bevorzugt entgegen einer Krümmung gebogen, die die Walze andernfalls, also ohne Zugeinrichtung, aufweist.

Mit Krümmung wird insbesondere das Abweichen der Walze von der Zylinderform bezeichnet. Die Zugeinrichtung verläuft bevorzugt parallel zur Walzenachse.

Die Zugeinrichtung umfasst bevorzugt ein axiales Zugmittel, das einen Zuganker umfassen kann. Es kann sich um eine Zugstange mit endseitigen Gewinden handeln, bzw. Spanneisen, bzw. Richtanker.

Meist verbiegen bzw. krümmen sich die Walzen bananenförmig, bzw. einfach, also in nur einem Krümmungsradius. Solche Verzüge resultieren insbesondere aus der Nicht-Homogenität des Walzenrohlings. Die Gründe können sein: schlechtes Grundmaterial, zu geringer Verschmiedungsgrad sowie unzureichende Wärmebehandlung beim Vergüten, Glühen, Härten. Die Walze wird bevorzugt entgegen einer Krümmung mit nur einem Krümmungsradius gebogen.

Die Erfindung betrifft in einer Ausführungsform ein Schleifbehandlungsverfahren von Gravurwalzen, die radial vom Gravurgrund vorstehende Plateauflächen aufweisen, bei dem die Gravurwalze um ihre Drehachse gedreht und die Plateauflächen der Gravurwalzen mittels eines Schleifwerkzeugs einem Schleifvorgang unterzogen werden.

Gravurwalzen für das Thermobonding von Vliesen besitzen regelmäßig eine Oberfläche, die aus Kegel- oder Pyramidenstümpfen besteht, also aus dreidimensionalen Strukturen, deren Querschnitt sich in radialer Richtung der Walze betrachtet zum Gravurgrund vergrößert.

Beim Thermobonding wird eine Vlieslage mit noch unverfestigten, thermoplastisches Material umfassenden Filamenten einem Walzenspalt zugeführt, welcher zwischen einer Gravurwalze und einer Gegenwalze mit glatter Oberfläche gebildet wird. Sowohl die Gravurwalze, als auch die Gegenwalze sind üblicherweise beheizt, wobei die Heizleistung der Gravurwalze so gewählt wird, dass der Kontakt der Plateauflächen mit den Filamenten zum Verschweißen derselben im Bereich der Anlage an den Plateauflächen führt.

Damit die Filamente während des Verschweißprozesses nicht mit den Plateauflächen verkleben, was zu einer Zerstörung der Vlieslage oder sogar zu einem gefährlichen Walzenwickel führen würde, bei dem die Vlieslage von der Gravurwalze aufgewickelt und durch die rasche Umfangsvergrößerung des Walzenwickels der Walzenspalt blockiert wird, müssen die Plateauflächen eine möglichst glatte Oberfläche aufweisen. Gravurwalzen werden daher nach der Herstellung der Gravur als "Rohwalzen" einem Schleifprozess unterzogen.

Hierzu werden die Rohwalzen regelmäßig beispielsweise an sich in ihrer Längsrichtung von dem gravierten Bereich anschließenden Walzenschultern drehbar gelagert und um ihre Drehachse drehangetrieben. Der Schleifvorgang erfolgt mit Hilfe eines Schleifwerkzeugs, welches parallel zur Drehachse längs über die Walze geführt wird, so dass sämtliche Plateauflächen der Gravur einer Schleifbehandlung unterzogen werden. Bei dem Schleifwerkzeug kann es sich um einen Schleifstein handeln, der selbst um eine parallel zur Drehachse der Gravurwalze verlaufende Rotationsachse rotiert.

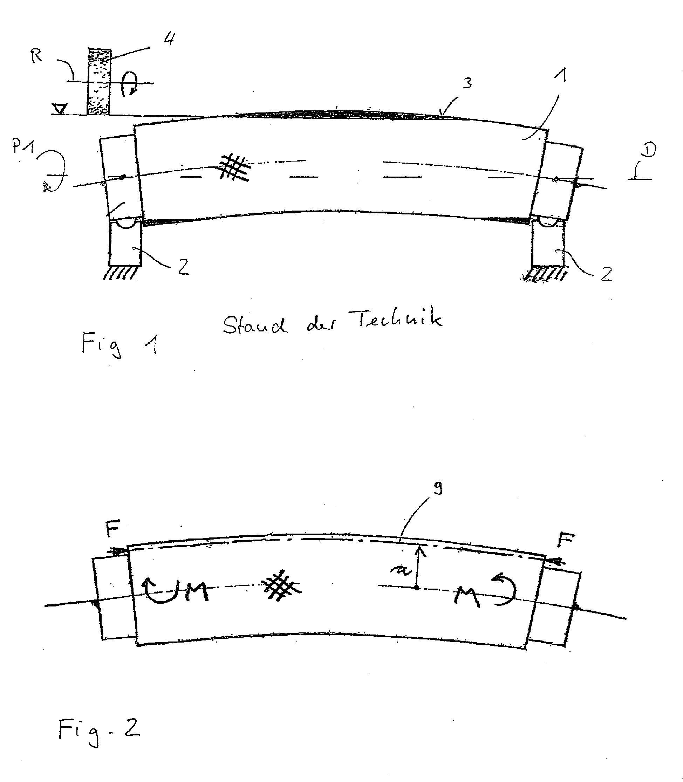

In vielen Fällen weist der Walzenkörper der Rohwalze aus dem Fertigungsprozess heraus eine Krümmung auf, die meist etwa in der Mitte zwischen den stirnseitigen Enden am größten ist. Der durch die Krümmung bedingte Rundlauffehler, der für den Thermobondingprozess als unerwünscht gilt, wird - wie in Fig. 1, die schematisch die Wirkung eines Schleifbehandlungsverfahrens nach dem Stand der Technik beschreibt, erkennbar ist - durch den Schleifvorgang zumindest im Wesentlichen beseitigt. Hierbei werden die Gravurstrukturen unterschiedlich weit abgeschliffen, so dass aufgrund ihres zum Gravurgrund hin vergrößernden Querschnitts sich Plateauflächen unterschiedlicher Flächengröße ergeben. Diese Plateauflächenunterschiede führen zu einem mit einer derartigen Gravurwalze durchgeführten Thermobondingverfahren verfestigten Vlies mit sich in Vorlaufrichtung der Vliesbahn periodisch ändernden Verfestigungspunktflächen, was zumindest zur Beeinträchtigung des von dieser Vliesbahn vermittelten optischen Eindrucks und sogar zur wesentlichen Verschlechterung von dessen Eigenschaften führen kann.

Aus der DE 699 12 162 T2 ist eine Schleifmaschine mit einer Schleifeinrichtung und mit einem dieser zugeordneten und mit dieser verschiebbaren Messsystem bekannt. Diese Schleifmaschine ist zum Schleifen einer Außenfläche einer Walze, beispielsweise einer Papiermaschinenwalze - insbesondere eines Papiertaschentuchzylinders oder Glättzylinders - vorgesehen.

Die JP 6328850 A offenbart ein Schleifverfahren, bei welchem ein Wellenkörper unter seiner Betriebstemperatur geschliffen wird, so dass während des späteren Betriebs sein Rundlauf verbessert und seine Durchbiegung beseitigt sind.

Ein Verfahren zur Beseitigung des Rundlauffehlers einer peripher gebohrten, beheizten Walze unter Betriebstemperatur ist aus der US 4, 250, 606 bekannt. Mittels eines in eine der peripheren Bohrungen eingesetzten Zugankers wird die Walze bei Raumtemperatur in dieselbe Krümmung versetzt, die bei Betriebstemperatur zuvor gemessen worden war. Bei Raumtemperatur wird die Walze dann zylindrisch geschliffen, so dass sie nach Entfernen des Zugankers bei Raumtemperatur eine Krümmung in ungekehrter Richtung wie zuvor bei Betriebstemperatur erhält. Nach anschließendem Aufheizen auf Betriebstemperatur weist die Walze dann keine wesentliche Durchbiegung auf.

Die EP 1 217 123 A1 betrifft eine Papierbearbeitungswalze, die während des Betriebs einer erhöhten Temperatur aussetzbar ist. Damit die Walze unter Produktionsbedingungen in der Maschinen eine für den Prozess optimale Form- bzw. Rundlaufgüte annimmt, weist die Walze eine warm bearbeitete Oberfläche auf. Sie ist beispielsweise warm geschliffen und/oder warm gewuchtet, oder das zuvor ermittelte Warmprofil der Walze wird nachträglich, nach Erkalten der Walze als Negativprofil auf die Walze kalt geschliffen übertragen.

Der Erfindung liegt daher auch die Aufgabe zugrunde, ein Verfahren zu schaffen, welches zur Bereitstellung verbesserter Gravurwalzen für das Thermobonding geeignet ist.

Diese Aufgabe wird durch das in Anspruch 2 wiedergegebene Schleifbehandlungsverfahren gelöst.

Bei diesem Schleifbehandlungsverfahren wird das Schleifwerkzeug zumindest annähernd entlang der von der Einhüllenden der Plateauflächen gebildeten Mantelfläche der Gravurwalze geführt. Es wird also nicht mehr, wie im Stand der Technik, ein aufgrund einer Walzenkrümmung vorliegender Rundlauffehler "weggeschliffen", sondern der Schleifvorgang erfolgt bevorzugt in einer Weise, bei welcher der Rundlauffehler im Betrieb der Walze zugunsten einer über die gesamte Gravurwalzen konstanten Plateauflächengröße toleriert wird.

Es werden also bevorzugt die Zugeinrichtungen vor dem Betrieb wieder entfernt, bzw. entlastet oder die Walze wird nicht ganz bzw. nicht mit höchster Genauigkeit geradegebogen.

Überraschenderweise hat sich gezeigt, dass trotz des nun regelmäßig im Betrieb vorhandenen Rundlauffehlers bei der Gravurwalze ein Thermobondingverfahren zusammen mit einer glatten Gegenwalze zu verfestigten Vliesbahnen mit sowohl optisch, als auch mechanisch verbesserten Eigenschaften führen kann.

Um das Schleifwerkzeug zumindest annähernd entlang der von der Einhüllenden der Plateauflächen gebildeten Mantelfläche der Gravurwalze führen zu können, kann bei einer bevorzugten Ausführungsform die Gravurwalze vor dem Schleifvorgang derart vorgespannt bzw. gebogen werden, dass ihre Einhüllende zumindest annähernd eine Zylinderform aufweist.

Die Walze wird also so weit bzw. mit hoher Genauigkeit entgegen der Krümmung gebogen, bis die Walze zumindest annähernd gerade ist.

Das Schleifwerkzeug wird dann parallel zur Drehachse der Gravurwalze verlagert und die Plateauflächen im Rahmen der durch den Restrundlauffehler bedingten Toleranz auf dieselbe Größe geschliffen.

Die Vorspannung wird mit Hilfe einer mit radialem Abstand zur Drehachse angeordneten Zugeinrichtung eingeleitet. Eine derartige Zugeinrichtung ist auch vorteilhaft, wenn die Gravurwalze ohnehin periphere, d. h. mit Abstand zu deren Drehachse angeordnete Längsbohrungen aufweist, insbesondere solche, die zumindest in erster Linie Temperierzwecken dienen. Die Zugeinrichtung wird dann bevorzugt in die periphere Bohrung eingebracht, die sich möglichst dicht entlang der größten, konkaven Krümmung der Gravurwalze erstreckt. Die mit der Zugeinrichtung ausgeübte Zugkraft wird so gewählt, dass die Krümmung der Walze zumindest im Wesentlichen eliminiert wird. Falls erforderlich, können auch mehrere Zugeinrichtungen in verschiedenen peripheren Bohrungen zum Einsatz kommen.

Die Gravurwalze kann auch durch gezielte, über deren Länge und/oder deren Querschnitt ungleichmäßige Temperierung vorgespannt werden. Diese ungleichmäßige Temperierung kann grundsätzlich auf jede beliebige, technologisch mögliche Weise erfolgen. Handelt es sich bei der Gravurwalze wiederum um eine solche mit peripheren Bohrungen, so kann die Temperierung vorzugsweise durch in den peripheren Bohrungen der Walze angeordneten Temperiermitteln, beispielsweise Heizelemente wie Heizstäben erfolgen.

Sollte die Gravurwalze eine zentrale Längsbohrung aufweisen, so kann Vorspannung auch mit einer in der zentralen Bohrung der Gravurwalze angeordneten Biegeeinrichtung erzeugt werden. Hierbei kann es sich beispielsweise um eine Biegeeinrichtung handeln, die für sich genommen aus der DE 198 19 663 A1 bekannt ist.

Bei den vorstehend beschriebenen, bevorzugten Ausführungsbeispielen des Schleifverfahrens wird das Schleifwerkzeug insbesondere dadurch zumindest annähernd entlang der von der Einhüllenden der Plateauflächen gebildeten Mantelfläche der Gravurwalze geführt, dass die Gravurwalze vor dem Schleifvorgang zumindest annähernd in eine Zylinderform gebracht wird.

Bei einer weiteren, bevorzugten Ausführungsform des erfindungsgemäßen Schleifverfahrens wird jedoch auf die Rohwalze keine gezielte Spannung zum Krümmungsausgleich ausgeübt. Sondern die Rundlaufabweichungen der Einhüllenden werden vor dem Schleifvorgang vermessen, die Messwerte bezogen auf die Einhüllende ortsaufgelöst abgespeichert und das Schleifwerkzeug unter zu Hilfenahme der abgespeicherten Messwerte während des Schleifvorgangs derart verlagert, dass es der Einhüllenden zumindest im wesentlichen folgt. Mit dieser Ausführungsform des erfindungsgemäßen Verfahrens lassen sich insbesondere auch solche Rohwalzen im Sinne einer möglichst konstanten Plateauflächengröße besonders vorteilhaft bearbeiten, die nicht nur eine einfache Krümmung aufweisen, sondern auch solche, die beispielsweise eine "S-Krümmung" oder im Rundlauf einen "Doppelschlag" aufweisen.

Grundsätzlich ist es zur Verbesserung der Genauigkeit des Schleifbehandlungsverfahrens wünschenswert, die Messwerte der Einhüllenden in einem möglichst engen Raster aufzunehmen. In der Praxis wird es in den meisten Fällen ausreichen, wennwie bevorzugt - Messwerte des Abstands der Einhüllenden von der Drehachse der Gravurwalze in Walzenlängsrichtung etwa alle 5 cm bis 20 cm und in Drehrichtung mit einem Winkelabstand von etwa 5° bis 20° aufgenommen und abgespeichert werden.

Die Erfindung erstreckt sich auch auf eine Gravurwalze, insbesondere eine solche, die für das Thermobonding von Vliesen vorgesehen ist, die mit einem Schleifbehandlungsverfahren der vorbeschriebenen Art bearbeitet wurde.

Die Erfindung betrifft auch ein Verfahren zur Herstellung von Gravuren auf Gravurwalzen, die radial vom Gravurgrund vorstehende Plateauflächen aufweisen, bei dem die Gravurwalze um ihre Drehachse gedreht und die Gravur in mehreren Graviervorgängen erzeugt wird.

Gravurwalzen für das Thermobonding von Vliesen besitzen regelmäßig eine Oberfläche, die aus Kegel- oder Pyramidenstümpfen besteht, also aus dreidimensionalen Strukturen, deren Querschnitt sich in radialer Richtung der Walze betrachtet zum Gravurgrund vergrößert.

Beim Thermobonding wird eine Vlieslage mit noch unverfestigten, thermoplastisches Material umfassenden Filamenten einem Walzenspalt zugeführt, welcher zwischen einer Gravurwalze und einer Gegenwalze mit glatter Oberfläche gebildet wird. Sowohl die Gravurwalze, als auch die Gegenwalze sind üblicherweise beheizt, wobei die Heizleistung der Gravurwalze so gewählt wird, dass der Kontakt der Plateauflächen mit den Filamenten zum Verschweißen derselben im Bereich der Anlage an den Plateauflächen führt.

Damit die Filamente während des Verschweißprozesses nicht mit den Plateauflächen verkleben, was zu einer Zerstörung der Vlieslage oder sogar zu einem gefährlichen Walzenwickel führen würde, bei dem die Vlieslage von der Gravurwalze aufgewickelt und durch die rasche Umfangsvergrößerung des Walzenwickels der Walzenspalt blockiert wird, müssen die Plateauflächen eine möglichst glatte Oberfläche aufweisen. Gravurwalzen werden daher während und nach der Herstellung der Gravur Schleifprozessen unterzogen, die auch eine möglichst exakte Zylinderform und einen möglichst exakten Rundlauf garantieren sollen.

Die Herstellung der Gravur kann beispielsweise mechanisch mit Hilfe einer Molette, thermisch mit Hilfe eines Lasers oder auch chemisch durch Ätzen mit Säure, wobei die Plateauflächen vorab mit Lack abgedeckt werden, oder auch durch Schleifen oder Fräsen erfolgen. Auch können bei der Herstellung der Gravur mehrere der vorgenannten Verfahren in aufeinanderfolgenden Gravurvorgängen zur Anwendung kommen.

Ein typisches Verfahren zur Herstellung von Gravuren auf Gravurwalzen umfasst beispielsweise die folgenden Schritte:
- Eine zuvor möglichst exakt zylindrisch geschliffene Walze wird mit Lack beschichtet.
- Anschließend wird mit Hilfe eines Lasers entsprechend der Vorgabe und des Rapportes Lack in den Bereichen weg gebrannt, in welchen ein Materialabtrag stattfinden soll.
- Durch Ätzen im Säurebad erhält die Walzenoberfläche in Bereichen, in denen zuvor der Lack weg gebrannt worden ist, entsprechende Vertiefungen.
- Eine erste Molette, die auf den maximalen Durchmesser der Walze abgestimmt ist, wird angedrückt und über die Oberfläche der Walze abgerollt. Dabei befindet sich die Molette im formschlüssigen Eingriff mit den bereits vorhandenen, durch Ätzen im Säurebad eingearbeiteten Vertiefungen.
- Durch Quetschen und Verdichten bildet sich das Gravurmuster auf der Walze weiter aus. Lack befindet sich schließlich im Wesentlichen nur noch auf den Plateauflächen der Gravur.
- Erforderlichenfalls wird die Walze einer weiteren Ätzbehandlung im Säurebad unterzogen. Sofern notwendig, muss die Lackschicht auf den Plateauflächen zuvor erneuert werden.
- Ist eine weitere, mechanische Bearbeitung der Walze mit Hilfe einer Molette erforderlich, so wird eine zweite Molette, die dem sich geänderten Rapport angepasst worden ist, erneut über die Oberfläche der Walze abgerollt. Erfahrungsgemäß sind je nach Gravurtiefe und Design bis zu drei verschiedene Moletten erforderlich, um die Plateauflächen nur gering in ihrer Lage verschieben zu müssen.
- Insbesondere aufgrund des Quetschens des Walzenmaterials bei der Behandlung mit einer Molette entstehen an den Plateauflächen der Gravur vorstehende Grate. Diese müssen in einem Vermessungsschliff abgetragen werden, um die Plateauflächen und die Gravurtiefe messtechnisch genau erfassen zu können.

Selbst bei Verfahren zur Herstellung von Gravuren, bei denen mehr Material thermisch, beispielsweise durch einen Laser, oder mechanisch durch Schleifen oder Fräsen abgetragen wird, muss der Gravurfortschritt stets vermessen werden. Hierfür bedarf es des vorab erwähnten Vermessungsschliffs der Walze, der nur an einer zumindest im Wesentlichen zylindrischen Walze vorgenommen werden kann.

Dies stellt in der Praxis ein erhebliches Problem dar, da die Walze sich beim Gravieren aufgrund von Kaltverfestigungen des Walzenmaterials und/oder durch Störungen des Gesamt-Spannungshaushaltes krümmt. Die Walze muss daher zwischen den Gravierschritten immer wieder gerichtet werden, was bei den bekannten Verfahren durch lokales Erhitzen thermisch erfolgt.

Hierzu werden bestimmte, zuvor durch Abschätzung lokalisierte Flammpunkte regelmäßig mit Hilfe einer Gasflamme erhitzt, wobei der Wärmeeintrag ebenfalls aus Erfahrungswerten abgeschätzt wird. Diese thermische Richtmethode ist sehr aufwendig und zeitintensiv. Denn stets muss zugewartet werden, bis der Walzenkörper wieder Raumtemperatur aufweist, um überprüfen zu können, ob die thermische, lokale Behandlung zu der gewünschten Ausrichtung der Walze geführt hat. Aufgrund der stets vorhandenen Erfolgsunsicherheit ist der Graviervorgang nahezu unkalkulierbar.

Der Erfindung liegt daher auch die Aufgabe zugrunde, ein verbessertes Verfahren zur Herstellung von Gravuren auf Gravurwalzen insbesondere für das Thermobonding zu schaffen.

Diese Aufgabe wird durch das in Anspruch 4 wiedergegebene Gravierverfahren gelöst.

Bei diesem Verfahren zur Herstellung von Gravuren auf Gravurwalzen wird die Walze vor dem ersten Graviervorgang in einem ersten Schleifvorgang zumindest im Wesentlichen zylindrisch geschliffen. In einem weiteren Schritt wird die Walze nach dem ersten Schleifvorgang zumindest dem ersten oder weiteren Graviervorgang unterzogen. Hierbei kann es sich insbesondere um einen thermischen oder chemischen Graviervorgang der eingangs beschriebenen Art, oder auch um einen beliebigen anderen oder auch um unterschiedliche, nacheinander durchgeführte Graviervorgänge handeln. Um den Gravurfortschritt zu erfassen, müssen die Plateauflächen und die Gravurtiefen vermessen werden, wozu - wie weiter oben beschrieben - zuvor ein Vermessungsschliff mittels eines Schleifwerkzeugs durchgeführt werden muss. Da die Walze aufgrund der Kaltverfestigung oder der Störung des Gesamt-Spannungshaushaltes regelmäßig krumm geworden ist, sieht das erfindungsgemäße Verfahren in dieser Ausführungsform vor, das Schleifwerkzeug während des Messschliffs zumindest annähernd entlang der von den Plateauflächen gebildeten Einhüllenden zu führen.

In einer Ausführungsform geschieht dies in einer Weise, bei welcher der Rundlauffehler im Betrieb der Walze zugunsten einer über die gesamte Gravurwalze konstanten Plateauflächengröße toleriert wird. Es werden also bevorzugt die Zugeinrichtungen vor dem Betrieb wieder entfernt, bzw. entlastet oder die Walze wird nicht ganz bzw. nicht mit höchster Genauigkeit geradegebogen. Überraschenderweise hat sich gezeigt, dass trotz des nun regelmäßig im Betrieb vorhandenen Rundlauffehlers bei der Gravurwalze ein Thermobondingverfahren zusammen mit einer glatten Gegenwalze zu verfestigten Vliesbahnen mit sowohl optisch, als auch mechanisch verbesserten Eigenschaften führen kann.

Um das Schleifwerkzeugs zumindest annähernd entlang der Einhüllenden der Gravurwalze führen zu können, kann bei einer weiteren, bevorzugten Ausführungsform die Gravurwalze vor dem Schleifvorgang derart vorgespannt werden, dass ihre Einhüllende zumindest annähernd eine Zylinderform aufweist. Die Walze wird also soweit bzw. mit höchster Genauigkeit entgegen der Krümmung gebogen, bis sie zumindest annähernd gerade ist. Das Schleifwerkzeug wird dann parallel zur Drehachse der Gravurwalze verlagert.

Die Vorspannung wird mit Hilfe einer mit radialem Abstand zur Drehachse angeordneten Zugeinrichtung eingeleitet. Eine derartige Zugeinrichtung kann insbesondere Verwendung finden, wenn die Gravurwalze ohnehin periphere, d. h. mit Abstand zu deren Drehachse angeordnete Längsbohrungen aufweist, insbesondere solche, die zumindest in erster Linie Temperierzwecken dienen. Die Zugeinrichtung wird dann bevorzugt in die periphere Bohrung eingebracht, die sich möglichst dicht entlang der größten, konkaven Krümmung der Gravurwalze erstreckt. Die mit der Zugeinrichtung ausgeübte Zugkraft wird so gewählt, dass die Krümmung der Walze zumindest im Wesentlichen eliminiert wird. Falls erforderlich, können auch mehrere Zugeinrichtungen in verschiedenen peripheren Bohrungen zum Einsatz kommen.

Auch können die Zugeinrichtungen, wenn für die weitere Behandlung oder Verwendung der Gravurwalze nicht hinderlich, in den Bohrungen belassen werden, um so nach weiteren Behandlungsschritten oder der Verwendung die Gravurwalze erforderlichenfalls richten zu können. In diesem Falle kann auf ein sonst regelmäßig erforderliches, thermisches Schlussrichten verzichtet werden. Dieses thermische Schlussrichten ist sonst regelmäßig erforderlich, da sich die Walze nach Entfernen der Zuganker meist krümmt.

Sollte die Gravurwalze eine zentrale Längsbohrung aufweisen, so kann Vorspannung auch mit einer in der zentralen Bohrung der Gravurwalze angeordneten Biegeeinrichtung erzeugt werden. Hierbei kann es sich beispielsweise um eine Biegeeinrichtung handeln, die für sich genommen aus der DE 198 19 663 A1 bekannt ist.

Bei den vorstehend beschriebenen, bevorzugten Ausführungsbeispielen des Gravierverfahrens wird das Schleifwerkzeug insbesondere dadurch zumindest annähernd entlang der Mantelfläche der Gravurwalze geführt, dass die Gravurwalze vor dem Schleifvorgang zumindest annähernd in eine Zylinderform gebracht wird.

Bei einer weiteren, bevorzugten Ausführungsform des erfindungsgemäßen Verfahrens wird jedoch auf die Gravurwalze keine gezielte Spannung zum Krümmungsausgleich ausgeübt. Sondern die Rundlaufabweichungen der Einhüllenden werden vor dem oder während des Schleifens vermessen, die Messwerte bezogen auf die Einhüllende ortsaufgelöst abgespeichert und das Schleifwerkzeug unter zu Hilfenahme der abgespeicherten Messwerte während des Schleifvorgangs derart verlagert, dass es der Mantelfläche zumindest im wesentlichen folgt. Mit dieser Ausführungsform des erfindungsgemäßen Verfahrens lassen sich insbesondere auch solche Gravurwalzen im Sinne einer möglichst konstanten Plateauflächengröße besonders vorteilhaft bearbeiten, die nicht nur eine einfache Krümmung aufweisen, sondern auch solche, die beispielsweise eine "S-Krümmung" oder im Rundlauf einen "Doppelschlag" aufweisen. Auch kann die Gravurwalze gleichsam vorgespannt und vermessen werden, um die Schleifgenauigkeit weiter zu verbessern.

Grundsätzlich ist es zur Verbesserung der Genauigkeit des Gravierverfahrens wünschenswert, die Messwerte der Mantelfläche in einem möglichst engen Raster aufzunehmen. In der Praxis wird es in den meisten Fällen ausreichen, wenn - wie bevorzugt - Messwerte des Abstands der Mantelfläche von der Drehachse der Gravurwalze in Walzenlängsrichtung etwa alle 5 cm bis 20 cm und in Drehrichtung mit einem Winkelabstand von etwa 5° bis 20° aufgenommen und abgespeichert werden.

Die Erfindung erstreckt sich auch auf eine Gravurwalze, insbesondere eine solche, die für das Thermobonding von Vliesen vorgesehen ist, die mit einem Gravierverfahren der vorbeschriebenen Art bearbeitet wurde.

Auch wenn die Walze, unabhängig davon, ob sie graviert oder glatt ist, etwa im Kalander aufgeheizt wird können sich Formfehler einstellen, die durch Temperatureintrag hervorgerufen werden.

In einer weiteren Ausführungsform des erfindungsgemäßen Verfahrens wird die Walze entgegen einer Krümmung gebogen, die zumindest auch aus dem Betrieb der Walze, insbesondere durch Aufheizung (oder Abkühlung) resultiert. Hierdurch wird ein besonders guter Rundlauf der Walze bei Arbeitsbedingungen erreicht. Die Krümmung resultiert also insbesondere zumindest auch aus der mit dem Betrieb verbundenen Aufheizung (bzw. Abkühlung). Diese Aufheizung (bzw. Abkühlung) kann durch äußere Einflüsse hervorgerufen werden oder die Walze kann temperiert, insbesondere beheizt sein.

Vorzugsweise wird während des Betriebs der Walze, also unter Arbeitsbedingungen, der Rundlauf der Walze gemessen und die mindestens eine Zugeinrichtung bzw. der mindestens eine Zuganker wird zum Erreichen eines möglichst runden Laufs nachjustiert.

Die Messung des Rundlaufs erfolgt bevorzugt mittels einer Messuhr.

Genauer gesagt erfolgt die Messung bevorzugt mit Hilfe einer Messuhr, die den Rundlauf der Walze während des Betriebs im Kalander zeigt.

Es wird also bevorzugt bei Betriebstemperatur gemessen. Die Betriebstemperatur kann durch äußere Umstände bzw. Beheizen erhöht oder durch Kühlen erniedrigt sein.

Die mindestens eine Zugeinrichtung bzw. die Ankerschrauben können im Kalander so angezogen werden, dass ein einwandfreier Rundlauf gewährleistet ist. Dieser Vorgang kann wiederholt werden.

Mit anderen Worten kann die Walze im Kalander in ihrer Mitte bezüglich des Rundlauffehlers vermessen und dann mittels der Zugeinrichtungen so nachgespannt werden, dass der Walzenschlag mittig nicht mehr vorhanden ist.

Die Erfindung erstreckt sich auch auf eine Walze, die mindestens eine in radialem Abstand zur Walzenachse angeordnete Zugeinrichtung aufweist, die sie entgegen einer Krümmung biegt, bevorzugt im Betrieb bzw. während des Betriebs der Walze. Es handelt sich um eine gravierte Walze. Die Zugeinrichtung verläuft bevorzugt parallel zur Walzenachse und umfasst bevorzugt Zuganker bzw. Spanneisen. Die Zugeinrichtung verbleibt bevorzugt stets, also auch während des Betriebs, in der Walze.

Die Walze kann zumindest nahezu zylindrisch sein. Die Zugeinrichtungen biegen sie in dieser Ausführungsform also so weit bzw. mit hoher Genauigkeit entgegen eine Krümmung, bis die Walze zumindest annähernd gerade ist.

In einer Ausführungsform weist die Walze periphere Bohrungen zu Temperierzwecken auf und zusätzlich mindestens eine Bohrung. Diese mindestens eine zusätzliche Bohrung dient bevorzugt also nicht Temperierzwecken. Sie verläuft bevorzugt parallel zur Walzenachse und von dieser beabstandet. Diese zusätzliche Bohrung dient bevorzugt ausschließlich der dauerhaften Aufnahme der Zugeinrichtung. Die Zugeinrichtung verläuft also bevorzugt in dieser zusätzlichen Bohrung.

Die mindestens eine zusätzliche Bohrung verläuft bevorzugt zwischen dem Lochkreis der peripheren Bohrungen zu Temperierzwecken und dem Zentrum der Walze bzw. der Walzenachse.

In den peripheren Bohrungen zu Temperierzwecken fließt bevorzugt Thermalöl.

In einer Ausführungsform schneidet die mindestens eine zusätzliche Bohrung die peripheren Bohrungen nicht. Es entsteht dann kein Dichtproblem.

In einer weiteren Ausführungsform weist die Walze periphere Bohrungen zu Temperierzwecken auf und die mindestens eine Zugeinrichtung verläuft in einer derartigen peripheren Bohrung. Hierdurch entfällt das Erfordernis einer zusätzlichen Bohrung. Die Walze weist hier bevorzugt keine zusätzliche Bohrung zur Aufnahme der Zugeinrichtung auf. Die mindestens eine Zugeinrichtung liegt in dieser Ausführungsform, bevorzugt einen Ringraum bildend, in einer auch Temperierzwecken dienenden peripheren Bohrung. Der Durchmesser dieser peripheren Bohrung und der Durchmesser der Zugeinrichtung sind bevorzugt derart aufeinander abgestimmt, dass eine hinreichend große freie Querschnittsfläche für das Thermalöl verbleibt.

Jede eine Zugeinrichtung aufnehmende, auch Temperierzwecken dienende periphere Bohrung ist bevorzugt abgedichtet. Es ist denkbar, dass die Abdichtung unter Zuhilfenahme der durch die Zugeinrichtung bewirkten Zugkraft erfolgt.

Die Zugeinrichtung ist bevorzugt in der Bohrung entsprechend festgelegt.

Die Walze ist bevorzugt zur Durchführung eines Verfahrens nach den Ansprüchen 9 bis 11 vorgesehen.

Die Erfindung soll nachfolgend anhand der überwiegend rein schematischen Zeichnungen weiter verdeutlicht werden. Es zeigen:
- Fig. 1: ein Schleifbehandlungsverfahren nach dem Stand der Technik;
- Fig. 2: in einem ersten Ausführungsbeispiel der Erfindung eine Gravurwalze mit einer mit radialem Abstand zur Drehachse angeordneten Zugeinrichtung zum Bewirken einer Vorspannung sowie
- Fig. 3: in einem ersten Ausführungsbeispiel der Erfindung - ausschnittsweisezwei Gravurstrukturen im Schnitt;
- Fig. 4: ein Gravierverfahren nach dem Stand der Technik;
- Fig. 5: in einem zweiten Ausführungsbeispiel der Erfindung eine Gravurwalze mit einer mit radialem Abstand zur Drehachse angeordneten Zugeinrichtung zum Bewirken einer Vorspannung sowie
- Fig. 6: in einem zweiten Ausführungsbeispiel der Erfindung - ausschnittsweise - die Kontur einer Gravurstruktur im Schnitt während des Gravierens und im Endzustand;
- Fig. 7: in einem dritten Ausführungsbeispiel der Erfindung eine Querschnittsdarstellung eines Endes einer Walze;
- Fig. 8: eine Querschnittsdarstellung der Walze aus Fig. 7 entlang der Schnittlinien VIII-VIII.

Wie Fig. 1 verdeutlicht, wird zum Zwecke des Schleifens eine aus der Herstellung gekrümmte Roh-Gravurwalze 1 drehbar in einer Lagereinrichtung 2 gelagert und im Sinne des Pfeils P1 mit in der Zeichnung nicht dargestellten Antriebsmitteln um die Drehachse D drehangetrieben. Die Krümmung der Gravurwalze 1 gegenüber der Drehachse D ist in Fig. 1 und 2 zur Veranschaulichung übertrieben dargestellt.

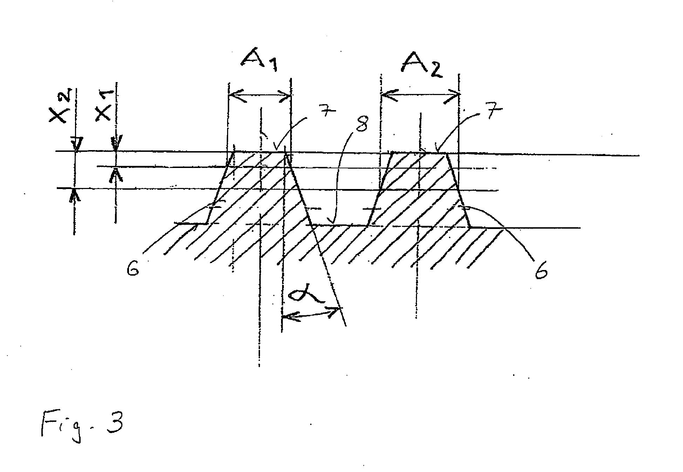

Gemäß eines zum Stand der Technik gehörenden Schleifbehandlungsverfahrens wird die zunächst ebenfalls gekrümmte Einhüllende 3 mit Hilfe eines Schleifwerkzeugs 4, welches einen um eine Rotationsachse R, die parallel zur Drehachse D verläuft, rotierenden Schleifstein 5 umfasst, durch Verlagerung desselben parallel zur Drehachse D oberflächengeschliffen, wobei die in Fig. 1 flächig geschwärzt dargestellten Bereiche der Gravurwalze 1 abgeschliffen werden. Aufgrund der Krümmung der Walze 1 und dem damit verbundenen Rundlauffehler werden in dem Bereich, der in Fig. 1 oben mittig dargestellt ist, die Gravurstrukturen 6 (siehe Fig. 3), die jeweils die Form eines sich zum Gravurgrund 8 hin vergrößernden Kegelstumpfs mit dem Kegelwinkel 2α aufweisen, unterschiedlich weit abgeschliffen. Die lediglich um die Länge X1 abgeschliffenen Gravurstrukturen weisen nach dem Schleifvorgangs eine Fläche A1 auf, die um den Betrag X2 abgeschliffenen eine größere Fläche A2. Entsprechendes gilt für die in Fig. 1 unten flächig schwarz dargestellten Gravurstrukturen.

Um diesen unterschiedlichen Abschliff der Gravurstrukturen zu verhindern, ist bei dem in Fig. 2 dargestellten Gravurwalzenmantel in einer nur angedeuteten peripheren Bohrung auf der konvexen Seite ein Zugelement 9 eingesetzt, mit welchem im Abstand a zur Walzenmitte eine Zugspannung F-F ausgeübt wird, die auf den Walzenmantel ein mit den Pfeilen M symbolisiertes Biegemoment ausübt, welches im Sinne einer Geraderichtung des gekrümmten Walzenmantels führt.

Wie sich unmittelbar aus den Figuren 1 bis 3 ergibt, führt eine Reduzierung der Walzenkrümmung während des Schleifverfahrens zu einer Vergleichmäßigung der Gravurflächen der Gravurstrukturen, da diese weniger unterschiedlich weit abgeschliffen wird.

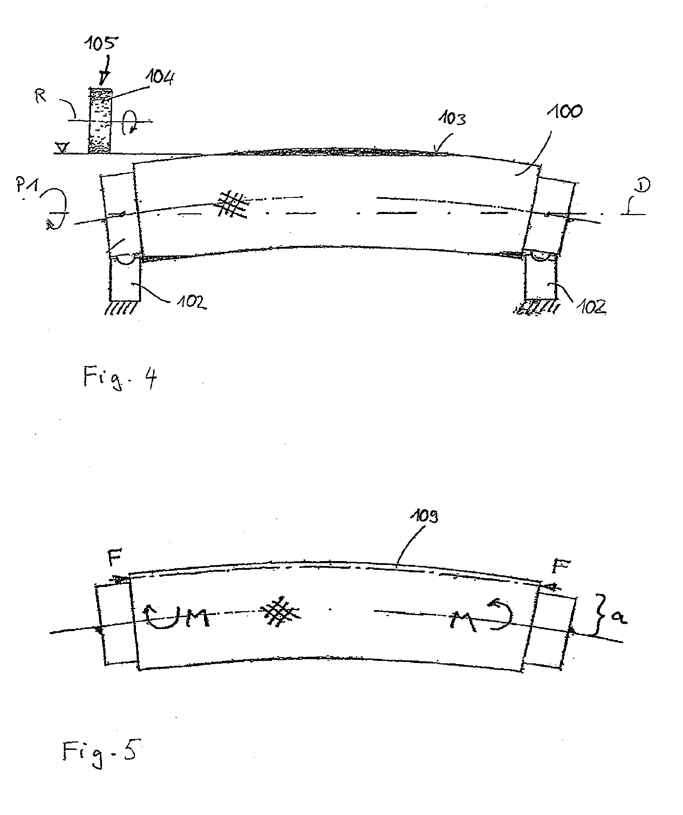

Fig. 4 verdeutlicht bezüglich eines zweiten Ausführungsbeispiels der Erfindung, wie zum Zwecke des Schleifens eine nach einem Graviervorgang gekrümmte Gravurwalze 100 drehbar in einer Lagereinrichtung 102 gelagert und im Sinne des Pfeils P1 mit in der Zeichnung nicht dargestellten Antriebsmitteln um die Drehachse D drehangetrieben wird. Die Krümmung der Gravurwalze 100 gegenüber der Drehachse D ist in Fig. 4 und 5 zur Veranschaulichung übertrieben dargestellt.

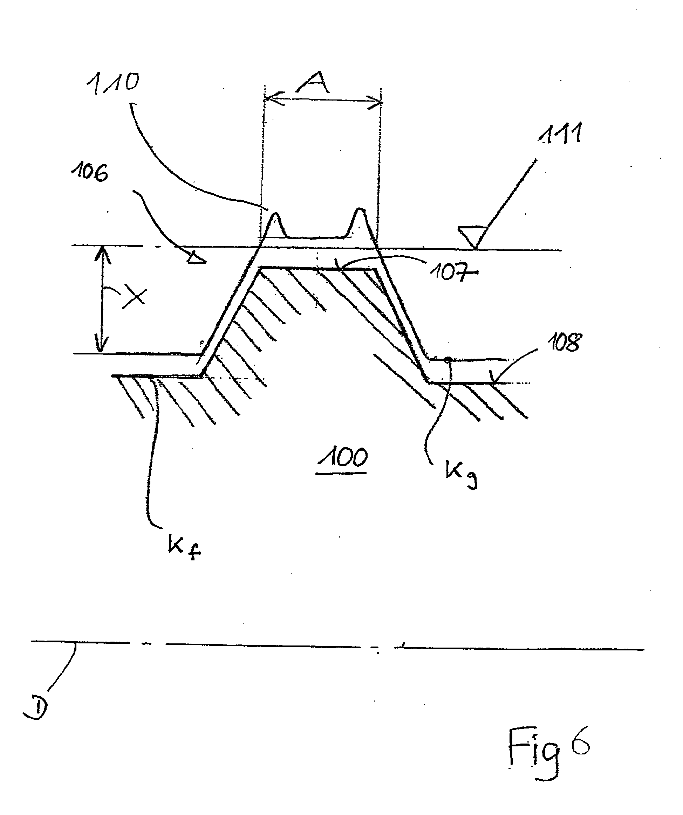

Würde nun die ebenfalls gekrümmte Einhüllende 103 mit Hilfe eines Schleifwerkzeugs 104, welches eine um eine Rotationsachse R, die parallel zur Drehachse D verläuft, rotierende Schleifscheibe 105 umfasst, durch Verlagerung derselben parallel zur Drehachse D geschliffen, so würden die in Fig. 1 flächig geschwärzt dargestellten Bereiche der Gravurwalze 100 weiter als die anderen abgeschliffen. Aufgrund der Krümmung der Walze 100 und dem damit verbundenen Rundlauffehler hätten in dem Bereich, der in Fig. 4 oben mittig dargestellt ist, die Gravurstrukturen 106 (siehe Fig. 6), die jeweils die Form eines sich zum Gravurgrund 108 hin vergrößernden Kegelstumpfs aufweisen, größere Plateauflächen und eine geringere Gravurtiefe als in den anderen Bereichen.

Entsprechendes gilt für die in Fig. 4 unten flächig schwarz dargestellten Gravurstrukturen.

Um diese unterschiedlichen Tiefen der Gravurstrukturen zu verhindern, ist bei dem in Fig. 5 dargestellten Gravurwalzenmantel in einer nur angedeuteten peripheren Bohrung auf der konvexen Seite ein Zugelement 109 eingesetzt, mit welchem im Abstand a zur Walzenmitte eine Zugspannung F-F ausgeübt wird, die auf den Walzenmantel ein mit den Pfeilen M symbolisiertes Biegemoment ausübt, welches im Sinne einer Geraderichtung des gekrümmten Walzenmantels führt.

Wie in Fig. 6 schematisch dargestellt ist, sind Messschleifvorgänge zwischen Gravierschritten erforderlich, da aufgrund sich während des Gravierens am Rand der Plateauflächen 107 bildenden Grate 110 weder die Flächen A der Plateauflächen 107, noch die Tiefen X der Gravur mit der erforderlichen Präzision vermessen werden können. In dieser Figur sind mit 111 ein Schleifvorgang, mit Kg die Kontur während es Gravierens und mit Kf die Kontur der fertigen Kontur bezeichnet.

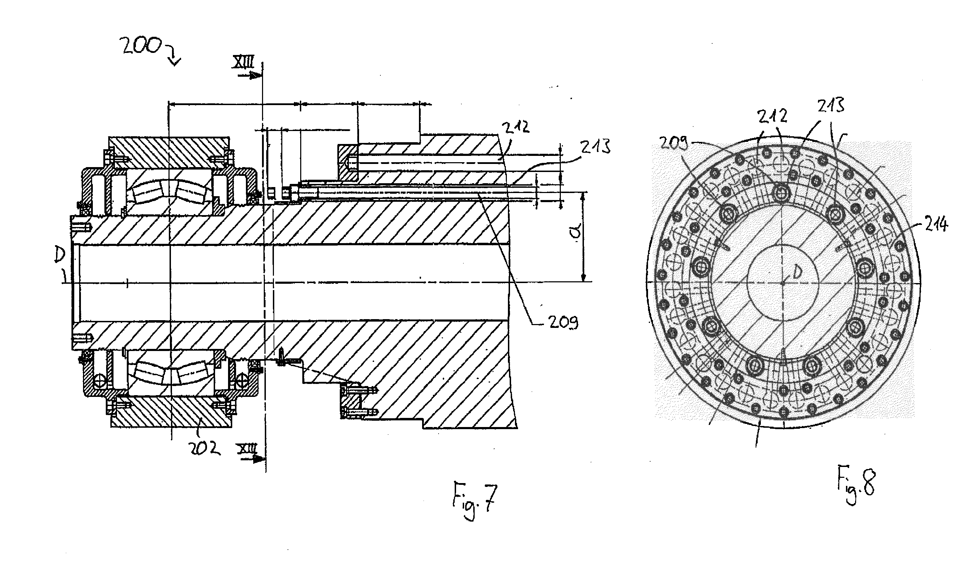

Die Fig. 7 und 8 zeigen ein drittes Ausführungsbeispiel der Erfindung. Wie in den zuvor beschriebene Ausführungsbeispielen weist die Walze mehrere parallel und in einigem Abstand zur Walzenachse verlaufende Zugeinrichtungen 209 auf, die durch Zuganker gebildet werden. Wie Fig. 7 erkennen lässt, ist der Zuganker durch eine Zugstange mit endseitigem Außengewinde gebildet, auf das eine Mutter geschraubt ist. Das nicht dargestellte rechte Ende der Walze 200 kann entsprechend ausgeführt sein.

Die Walze 200 ist beheizt. Sie weist periphere Bohrungen 212 auf, die zu Temperierzwecken dienen und mit Thermalöl gefüllt sein können. Die Walze weist darüber hinaus zusätzliche Bohrungen 213 auf, die parallel zu den peripheren Bohrungen 212 zu Temperierzwecken und innerhalb des durch diese gebildeten Lochkreises 214 verlaufen. Die Zuganker verlaufen in diesen zusätzlichen Bohrungen 213. Sie verbleiben auch während des Betriebs der Walze 200 in der Walze. Auch solche aus dem Betrieb der Walze durch Aufheizung resultierende Verwerfungen können daher ausgeglichen werden. Mit anderen Worten werden Formfehler, die durch den Temperatureintrag und/oder andere Einflüsse wie schlechtes Grundmaterial, zu geringer Verschmiedungsgrad, sowie unzureichende Wärmebehandlung bei dem Vergüten, Glühen, Härten usw. hervorgerufen werden, korrigiert. Die Walze 200 kann graviert oder glatt sein.

Anders ausgedrückt weist die Walze Zugeinrichtungen 209 auf, die axiale Zugmittel umfassen. Diese biegen die Walze 200 entgegen einer ohne Zugmittel bestehenden Krümmung.

Die Drehachse D der Walze 200 und die Walzenachse der Walze 200 fallen in dem in den Fig. 7 und 8 gezeigten Ausführungsbeispiel zumindest nahezu zusammen, da die Walze 200 entgegen einer Krümmung soweit bzw. mit hoher Genauigkeit gebogen ist, dass sie zylindrisch ist.

Die Zugeinrichtung 9, 109, 209 kann aus dem Stahl 42CrMo4v gebildet sein und einen Durchmesser von 10 mm bis 30 mm, bzw. etwa 22 mm (M22) aufweisen. Die zusätzlichen Bohrungen 213 können einen Durchmesser von 20mm bis 40mm bzw. insbesondere etwa 32mm aufweisen. Wie Fig. 8 zeigt, weist die Walze 200 neun zusätzliche Bohrungen 213 auf, in denen jeweils eine Zugeinrichtung 209 angeordnet ist und 27 periphere Bohrungen 212 zu Temperierzwecken.

Bei allen gezeigten Ausführungsbeispielen ist die Walze 1, 100, 200 entgegen einer relativ zur Walze ortsfesten Krümmung der Walze gebogen. Die Zugeinrichtungen 9, 109, 209 bewirken statische Kräfte. Es handelt sich also nicht etwa um durchbiegungssteuerbare Walzen, die entgegen einer durch die Linienkraft des Walzenspaltes hervorgerufenen, bezogen auf die Walze umlaufenden Biegung beeinflussbar sind.

### Bezugszeichenliste:

- 1, 100, 200: Walze
- 2, 102, 202: Lagereinrichtung
- 3, 103,: Einhüllende
- 4, 104: Schleifwerkzeugs
- 5, 105: Schleifscheibe bzw. Schleifstein
- 6, 106: Gravurstrukturen
- 7, 107: Plateauflächen
- 8, 108: Gravurgrund
- 9, 109, 209: Zugelement
- 110: Grat
- 111: Schleifvorgang
- 212: periphere Bohrungen
- 213: zusätzliche Bohrungen
- 214: Lochkreis
- a: Abstand
- A: Flächen
- D: Drehachse
- F-F: Zugspannung
- Kg: Kontur während des Gravierens
- Kf: Kontur der fertigen Gravur
- M: Pfeil
- P1: Pfeil
- R: Rotationsachse
- X: Tiefen
- X1, X2: Längen
- α: Winkel

## Patentansprüche

1. Verfahren bei dem eine eine Drehachse (D) aufweisende Walze (1, 100, 200) entgegen einer Krümmung gebogen wird, wobei dies mittels mindestens einer in radialem Abstand zur Drehachse (D) angeordneten Zugeinrichtung (9, 109, 209) erfolgt, wobei das Verfahren zur Verminderung des Rundlauffehlers einer umlaufenden Walze (1, 100, 200) dient und die Walze (1, 100, 200) eine Gravurwalze ist und die mit der Zugeinrichtung (9, 109, 209) ausgeübte Zugkraft so gewählt wird, dass die Krümmung der Walze (1, 100, 200) zumindest im Wesentlichen eliminiert wird.

2. Verfahren nach Anspruch 1, **dadurch gekennzeichnet, dass** das Verfahren ein Schleifbehandlungsverfahren von Gravurwalzen (1) ist, die radial vom Gravurgrund (8) vorstehende Plateauflächen (7) aufweisen, bei dem die Gravurwalze (1) um ihre Drehachse (D) gedreht und die Plateauflächen (7) der Gravur mittels eines Schleifwerkzeugs (4) einem Schleifvorgang unterzogen werden,
wobei das Schleifwerkzeug (4) zumindest annähernd entlang der von der Einhüllenden (3) der Plateauflächen gebildeten Mantelfläche der Gravurwalze (1) geführt wird.

3. Schleifbehandlungsverfahren nach Anspruch 2, **dadurch gekennzeichnet, dass** die Gravurwalze (1) vor dem Schleifvorgang derart vorgespannt wird, dass ihre Einhüllende (3) zumindest annähernd eine Zylinderform aufweist und dass das Schleifwerkzeug (4) parallel zur Drehachse (D) der Gravurwalze (1) verlagert wird.

4. Verfahren nach Anspruch 1, **dadurch gekennzeichnet, dass** das Verfahren ein Verfahren zur Herstellung von Gravuren ist, die radial vom Gravurgrund (108) vorstehende Plateauflächen (107) aufweisen, auf Gravurwalzen (100), bei dem die Gravurwalze (100) um ihre Drehachse (D) gedreht und die Gravur in mehreren Graviervorgängen erzeugt wird,
wobei
die Gravurwalze (100) vor dem ersten Graviervorgang in einem ersten Schleifvorgang zumindest im Wesentlichen zylindrisch geschliffen wird,
wobei die Gravurwalze (100) nach dem ersten Schleifvorgang zumindest den ersten oder weiteren Graviervorgängen unterzogen wird,
und wobei die Plateauflächen (107) nach dem ersten und/oder weiteren Graviervorgängen in zumindest einem zweiten oder weiteren Schleifvorgängen (111) mittels mindestens eines Schleifwerkzeugs (104) schleifbehandelt werden,
wobei das Schleifwerkzeug (104) zumindest annähernd entlang der von den Plateauflächen (107) gebildeten Einhüllenden (103) geführt wird.

5. Gravierverfahren nach Anspruch 4, **dadurch gekennzeichnet, dass** die Gravurwalze (100) vor dem Graviervorgang derart vorgespannt wird, dass ihre Einhüllende (103) zumindest annähernd eine Zylinderform aufweist und dass das Schleifwerkzeugs (104) parallel zur Drehachse (D) der Gravurwalze (101) verlagert wird.

6. Gravierverfahren nach Anspruch 4 oder 5, wobei die Walze periphere Bohrungen aufweist, **dadurch gekennzeichnet, dass** die Zugeinrichtung (109) einen oder mehrere Zuganker umfasst, die in einer oder mehreren peripheren Bohrungen der Gravurwalze (100) angeordnet werden.

7. Gravierverfahren nach Anspruch 6, **dadurch gekennzeichnet, dass** der eine oder die mehreren Zuganker in der oder den peripheren Bohrungen verbleibt.

8. Gravurwalze (1, 100), die mit einem Verfahren nach einem der Ansprüche 2 bis 7 bearbeitet wurde.

9. Verfahren nach Anspruch 1, **dadurch gekennzeichnet, dass** die Walze (200) entgegen einer Krümmung gebogen wird, die zumindest auch aus dem Betrieb der Walze (200) durch Aufheizung resultiert.

10. Verfahren nach Anspruch 9, **dadurch gekennzeichnet, dass** während des Betriebs, also unter Arbeitsbedingungen, der Rundlauf der Walze (200) gemessen wird und die mindestens eine Zugeinrichtung (209) zum Erreichen eines möglichst runden Laufs nachjustiert wird.

11. Verfahren nach Anspruch 10, **dadurch gekennzeichnet, dass** die Messung mit Hilfe einer Messuhr erfolgt, die den Rundlauf der Walze (200) während des Betriebs im Kalander zeigt.

12. Walze (1, 100, 200), **dadurch gekennzeichnet, dass** sie eine umlaufende Walze ist, die mindestens eine in radialem Abstand zur Walzenachse angeordnete Zugeinrichtung (9, 109, 209) aufweist, die sie entgegen einer Krümmung biegt, wobei die Walze (1, 100, 200) eine Gravurwalze ist und die mit der Zugeinrichtung (9, 109, 209) ausgeübte Zugkraft so gewählt ist, dass die Krümmung der Walze (1, 100, 200) zumindest im Wesentlichen eliminiert ist.

13. Walze (200) nach Anspruch 12, **dadurch gekennzeichnet, dass** sie mindestens eine Zugeinrichtung (209) aufweist, die sie im Betrieb entgegen einer Krümmung biegt.

14. Walze nach Anspruch 12 oder 13, **dadurch gekennzeichnet, dass** sie periphere Bohrungen (212) zu Temperierzwecken aufweist und zusätzlich mindestens eine Bohrung (213) und die Zugeinrichtung (209) in dieser zusätzlichen Bohrung (213) verläuft.

15. Walze nach Anspruch 12 oder 13, **dadurch gekennzeichnet, dass** sie periphere Bohrungen (212) zu Temperierzwecken aufweist und die Zugeinrichtung (209) in einer derartigen Bohrung (212) verläuft.

## Claims

1. Method in which a roller (1, 100, 200) having a rotational axis (D) is bent against a curvature, this taking place by means of at least one traction device (9, 109, 209) situated at a radial distance from the rotational axis (D), wherein the method is used for reducing the radial runout of a revolving roller (1, 100, 200), and the roller (1, 100, 200) is a gravure roller, and the tensile force exerted by the traction device (9, 109, 209) is selected in such a way that the curvature of the roller (1, 100, 200) is at least substantially eliminated.

2. Method according to Claim 1, **characterized in that** the method is a grinding treatment method for gravure rollers (1) which have plateau surfaces (7) protruding radially from the gravure base (8), in which the gravure roller (1) is rotated about its rotational axis (D), and the plateau surfaces (7) of the gravure undergo a grinding operation using a grinding tool (4),
wherein the grinding tool (4) is guided at least approximately along the lateral surface of the gravure roller (1) formed by the coverings (3) of the plateau surfaces.

3. Grinding treatment method according to Claim 2, **characterized in that** prior to the grinding operation, the gravure roller (1) is pretensioned in such a way that its covering (3) has an at least approximately cylindrical shape, and that the grinding tool (4) is displaced parallel to the rotational axis (D) of the gravure roller (1).

4. Method according to Claim 1, **characterized in that** the method is a method for producing gravures, which have plateau surfaces (107) protruding radially from the gravure base (108), on gravure rollers (100), in which the gravure roller (100) is rotated about its rotational axis (D) and the gravure is produced in multiple engraving operations,
wherein
prior to the first engraving operation, the gravure roller (100) is ground at least substantially cylindrically in a first grinding operation,
wherein after the first grinding operation, the gravure roller (100) undergoes at least the first or further engraving operation(s),
and wherein after the first and/or further engraving operation(s), the plateau surfaces (107) undergo grinding treatment in at least a second or further grinding operation(s) (111), using at least one grinding tool (104),
wherein the grinding tool (104) is guided at least approximately along the coverings (103) formed by the plateau surfaces (107).

5. Engraving method according to Claim 4, **characterized in that** prior to the engraving operation, the gravure roller (100) is pretensioned in such a way that its covering (103) has an at least approximately cylindrical shape, and that the grinding tool (104) is displaced parallel to the rotational axis (D) of the gravure roller (100).

6. Engraving method according to Claim 4 or 5, wherein the roller has peripheral boreholes, **characterized in that** the traction device (109) includes one or more tension rods which is/are situated in one or more peripheral boreholes of the gravure roller (100).

7. Engraving method according to Claim 6, **characterized in that** the one or more tension rods remain(s) in the peripheral borehole(s).

8. Gravure roller (1, 100) which has been machined using a method according to one of Claims 2 to 7.

9. Method according to Claim 1, **characterized in that** the roller (200) is bent against a curvature which also results at least from the operation of the roller (200) by heating.

10. Method according to Claim 9, **characterized in that** the concentricity of the roller (200) is measured during operation, i.e., under working conditions, and the at least one traction device (209) is readjusted for achieving the most even running possible.

11. Method according to Claim 10, **characterized in that** the measurement takes place using a dial gauge which indicates the concentricity of the roller (200) during operation in the calender.

12. Roller (1, 100, 200), **characterized in that** it is a revolving roller having at least one traction device (9, 109, 209), situated at a radial distance from the roller axis, which bends the roller axis against a curvature, wherein the roller (1, 100, 200) is a gravure roller, and the tensile force exerted by the traction device (9, 109, 209) is selected in such a way that the curvature of the roller (1, 100, 200) is at least substantially eliminated.

13. Roller (200) according to Claim 12, **characterized in that** it has at least one traction device (209) which bends the roller against a curvature during operation.

14. Roller according to Claim 12 or 13, **characterized in that** it has peripheral boreholes (212) for temperature regulation purposes, and additionally has at least one borehole (213), and the traction device (209) extends in this additional borehole (213).

15. Roller according to Claim 12 or 13, **characterized in that** it has peripheral boreholes (212) for temperature regulation purposes, and the traction device (209) extends in such a borehole (212).

## Revendications

1. Procédé dans lequel un cylindre (1, 100, 200), ayant un axe de rotation (D), est plié dans le sens opposé à une courbure, cela étant effectué à l'aide d'au moins un moyen de traction (9, 109, 209) disposé à une distance radiale de l'axe de rotation (D), le procédé servant à réduire le défaut de cylindricité d'un cylindre rotatif (1, 100, 200) et le cylindre (1, 100 200) étant un cylindre de gravure et la force de traction, exercée avec le moyen de traction (9, 109, 209), étant choisie de façon à éliminer au moins sensiblement la courbure du cylindre (1, 100, 200).

2. Procédé selon la revendication 1, **caractérisé en ce que** le procédé est un procédé de rectification de cylindres de gravure (1) qui possèdent des méplats (7) saillant radialement de la base de gravure (8), dans lequel le cylindre de gravure (1) est entraîné en rotation sur son axe de rotation (D), et les méplats (7) de la gravure sont soumis à une opération de rectification à l'aide d'un outil de rectification (4),
l'outil de rectification (4) étant guidé au moins approximativement le long de la surface d'enveloppe du cylindre de gravure (1) qui est formée par l'enveloppante (3) des méplats.

3. Procédé de rectification selon la revendication 2, **caractérisé en ce que** le cylindre de gravure (1) est précontraint avant l'opération de rectification de telle sorte que son enveloppante (3) a au moins approximativement une forme cylindrique et **en ce que** l'outil de rectification (4) est déplacé parallèlement à l'axe de rotation (D) du cylindre de gravure (1).

4. Procédé selon la revendication 1, **caractérisé en ce que** le procédé est un procédé de réalisation de gravures qui comportent des méplats (107) saillant radialement de la base de gravure (108), sur des cylindres de gravure (100), dans lequel le cylindre de gravure (100) est entraîné en rotation sur son axe de rotation (D) et la gravure est réalisée en plusieurs opérations de gravure,
le cylindre de gravure (100) étant rectifié au moins sensiblement de façon cylindrique avant la première opération de gravure avant la première opération gravure,
le cylindre de gravure (100) étant soumis à au moins une première opération de gravure ou à d'autres opérations de gravure après la première opération de rectification,
et, après la première opération de gravure et/ou les autres opérations de gravure, les méplats (107) étant rectifiés dans au moins une deuxième opération de rectification ou dans d'autres opérations de rectification (111) à l'aide d'au moins un outil de rectification (104),
l'outil de rectification (104) étant guidé au moins approximativement le long de l'enveloppante (103) formée par les méplats (107).

5. Procédé de gravure selon la revendication 4, **caractérisé en ce que** le cylindre de gravure (100) est précontraint avant l'opération de gravure de telle sorte que sont enveloppante (103) présente au moins approximativement une formant cylindrique et de façon à déplacer l'outil de rectification (104) parallèlement à l'axe de rotation (D) du cylindre de gravure (101).

6. Procédé de gravure selon la revendication 4 ou 5, dans lequel le cylindre comporte des perçages périphériques, **caractérisé en ce que** le moyen de traction (109) comporte un ou plusieurs tirants qui sont disposés dans un ou plusieurs perçages périphériques du cylindre de gravure (100).

7. Procédé de gravure selon la revendication 6, **caractérisé en ce que** le tirant ou la pluralité de tirants restent dans le ou les perçages périphériques.

8. Cylindre de gravure (1100) qui a été traité par un procédé selon l'une quelconque des revendications 2 à 7.

9. Procédé selon la revendication 1, **caractérisé en ce que** le cylindre (200) est plié dans le sens opposé à une courbure qui résulte par échauffement au moins également du fonctionnement du cylindre (200).

10. Procédé selon la revendication 9, **caractérisé en ce que**, pendant le fonctionnement, donc dans des conditions de travail, on mesure la cylindricité du cylindre (200) et on réajuste l'au moins un moyen de traction (209) pour parvenir à une cylindricité la plus parfaite possible.

11. Procédé selon la revendication 10, **caractérisé en ce que** la mesure est effectuée à l'aide d'un calibre à cadran qui indique le cylindricité du cylindre (200) pendant le fonctionnement dans la calandre.

12. Cylindre (1, 100, 200), **caractérisé en ce qu'**il est un cylindre rotatif qui comporte un moyen de traction (9, 109, 209) qui disposé à une distance radiale de l'axe de cylindre et qui plie ledit cylindre dans le sens opposé à une courbure, le cylindre (1, 100, 200) étant un cylindre de gravure et la force de traction, exercée à l'aide du moyen de traction (9, 109, 209), étant choisie de façon à éliminer au moins sensiblement la courbure du cylindre (1, 100, 200).

13. Cylindre (200) selon la revendication 12, **caractérisé en ce qu'**il comprend au moins un moyen de traction (209) qui plie ledit cylindre dans le sens opposé à une courbure en fonctionnement.

14. Cylindre selon la revendication 12 ou 13, **caractérisé en ce qu'**il comporte des perçages périphériques (212) servant à réguler la température et en plus au moins un perçage (213) et **en ce que** le moyen de traction (209) s'étend dans ce perçage supplémentaire (213).

15. Cylindre selon la revendication 12 ou 13, **caractérisé en ce qu'**il comporte des perçages périphériques (212) servant à réguler la température et le moyen de traction (209) s'étend un des perçages (212).
